# EUROPEAN PATENT SPECIFICATION

(11) **EP 1 935 235 B1**
(45) Date of publication and mention of the grant of the patent: **24.03.2010**
(21) Application number: 07076031.9
(22) Date of filing: 29.11.2007
(51) Int. Cl.: A01J 7/02

(54) **Teat cup cleaning device and method related thereto**
Reinigungsgerät für einen Melkbecher und entsprechendes Verfahren
Dispositif de nettoyage de gobelet trayeur et procédé associé à celui-ci

(30) Priority: 21.12.2006 NL 1033100; 24.05.2007 NL 1033883
(43) Date of publication of application: 25.06.2008
(73) Proprietor: Maasland N.V., 3147 PA Maassluis (NL)
(72) Inventor: Van den Berg, Karel, 2971 VB Bleskensgraaf (NL)
(74) Representative: Corten, Maurice Jean F.M.

(56) References cited:
- EP-A2- 1 186 229
- WO-A-03/077645
- CH-A- 368 009
- JP-A- 7 116 616

## Description

The present invention relates in general to a teat cup cleaning device and a method of cleaning at least one teat cup.

The invention relates in particular to a teat cup cleaning device comprising a heating chamber, provided with a discharge that is closable by means of a valve, and arranged for connection to a teat cup, a filling device for filling the heating chamber with an amount of cleaning liquid, and heating means which are arranged to heat the contents of the heating chamber.

Document CH 368 009 A discloses a teat cup cleaning device comprising a heating chamber, a filling device and heating means such that, when a cleaning fluid is heated to its boiling temperature, the cleaning fluid flower first in a liquid state from the heating chamber into the teat cups, then in a vapour state.

Document WO03/077645 discloses a device for steam-cleaning of teat cups, comprising a chamber which is closable by means of a pressure valve and which contains a heating means. The pressure valve opens at a selected overpressure, so that a steam jet will be released.

A drawback of the known device is that even a strong steam jet has a limited cleaning/disinfecting power, often insufficient for cleaning and/or disinfecting a teat cup in a reliable manner.

It is an object of the device according to the invention to be able to provide a more reliable cleaning and/or disinfecting action.

This object is achieved by the invention by means of a device of the type mentioned in the preamble of independent claim 1, wherein the filling device is arranged to fill the heating chamber with such an amount of cleaning liquid that, in a situation in which the heating chamber has been closed by means of the valve and the cleaning liquid has been heated to a temperature T higher than the boiling point Tk of the cleaning liquid at ambient pressure, the valve being arranged to open in this situation, there will be cleaning liquid in the liquid state present in the heating chamber.

This filling device is arranged to still contain an amount of cleaning liquid in the liquid state at the moment of opening the valve of the discharge. The heating means have heated the contents, that is to say the cleaning liquid, to a temperature above the normal boiling point Tk of that liquid, in which case also vapour will be formed. By opening that valve, the pressure in the heating chamber will fall to the ambient pressure, in which case, of course, the amount of vapour present will escape. However, it is more important that the cleaning liquid is a superheated liquid at that lower pressure. It will then start to boil suddenly and with great force. The vapour bubbles which are then formed will carry at least a part of the liquid outside. In fact, not only vapour, but a vapour-liquid mixture is led outside through the discharge. Also in view of the much higher density of liquid, the total heat content of the vapour-liquid mixture is much higher than the heat content of vapour only, so that also the cleaning and/or disinfecting action will be increased considerably.

It is pointed out that the heating chamber may be filled via the discharge. It is also possible to provide a separate supply to the heating chamber which should then preferably be closable as well, for example by means of a valve.

Besides, the discharge may be arranged for connection to a teat cup, but the heating chamber as a whole may also be arranged for connection to the teat cup, in which case the discharge should, of course, be provided in such a way that it is still possible for the heated contents to reach the teat cup. The discharge or the heating chamber may, for example, comprise a teat cup gripping means, such as one or more clamps. It is pointed out here that connection should be understood in a wider sense, and comprises the situation that the teat cup(s) is/are placed in a position enabling them to be cleaned in an efficient manner by means of the device. For example, there may be left some interspace between the teat cup and the teat cup cleaning device. This is in particular the case if an outer side of the teat cup has to be cleaned, but may also occur upon cleaning the inner side of a teat cup. In the latter case, however, it is advantageous to connect the teat cup in a sealing manner to the teat cup cleaning device. In this case, it may again be advantageous to provide a discharge of contents of the teat cup, such as by means of a milk vacuum connection.

In addition, it is in particular possible to arrange the discharge or the entire heating chamber for connection to and cleaning of a plurality of teat cups, for example by providing a corresponding number of teat cup gripping means, and/or by dividing the discharge into a corresponding number of separate sub-discharges. An embodiment arranged in such a way may save time during cleaning, but may require a higher total power.

The heating means may comprise in principle any known heating means. Examples are burners, immersion heaters or other electric heating means, microwave radiators, etc. In practice, electric heating means will often be preferred because of their user-friendliness and high efficiency.

Particular embodiments of the invention may be found in the dependent claims.

In particular, the filling device is arranged to fill the heating chamber with such an amount of cleaning liquid that in the mentioned situation at least 10%, preferably at least 50%, more preferably at least 90%, of the amount of cleaning liquid with which the heating chamber was initially filled, will be present in the liquid state in the heating chamber.

It will be obvious that a higher percentage of cleaning liquid still present in the liquid state will also ensure a higher total heat content. The degree of filling of the heating chamber being adjustable will also make it possible to set the amount of vapour-liquid mixture supplied, and thus the total heat content thereof. The device may thus be adapted to different cleaning requirements.

In one embodiment, the filling device is arranged to fill the heating chamber with an amount of cleaning liquid that is substantially equal to the content of the heating chamber. A highest possible heat content is thus ensured.

In a special embodiment, the temperature T amounts to at least 130°C, more preferably to at least 160°C. At a higher temperature, not only the heat content will be greater, but also the (equilibrium) vapour pressure will be higher and, as a result thereof, the difference from the ambient pressure will be greater. Upon opening of the heating chamber, that greater pressure difference will also lead to more violent boiling, so that the contents of the heating chamber will, moreover, be emitted in a more violent manner.

In particular, the valve comprises a pressure-relief valve. This is a simple type of valve which will (be capable to) open at a particular pressure, for example independently of the type of cleaning liquid. In fact, the difference from the ambient pressure is relevant, but the latter will vary not more than 2-3%.

An opening overpressure OD of the pressure-relief valve amounts in particular to at least 2 bar absolute pressure. At this value there is already obtained a satisfactory cleaning action. The opening overpressure OD preferably amounts to at least 8 bar absolute pressure. At such a value, in most cases there is achieved a very good cleaning and also a very good disinfection. It is pointed out that the mentioned overpressures are to a certain extent connected with the amount of cleaning liquid that is heated in the heating chamber. A small amount will have to be heated to a higher pressure in order to have sufficient heat content. In practice, overpressure and amount may be adapted to each other.

In one embodiment, the valve comprises a valve that is controllable by means of a control device. This provides the possibility of adapting the conditions in which the valve opens to the cleaning wishes in a very simple manner. For example, if a teat cup is contaminated to a great extent, or should be disinfected, more heat content is needed than in the case of teat cups that are not or hardly contaminated. In that case, it is not only possible to adapt the amount of cleaning liquid, but also the heating condition. In particular, the control device is arranged to open the valve at one of a temperature OT or a pressure OD, preferably an adjustable temperature OT or an adjustable pressure OD, in the heating chamber. The heat content of the cleaning liquid to be emitted can thus be controlled in a very flexible manner.

In a special embodiment, the milking implement comprises a cleaning liquid storage container which is connectable to the heating chamber, preferably by means of a second valve. The milking implement may thus be selfsupporting, which may be of great advantage, for example in the case of an independent or even a self-propelled milking implement. The cleaning liquid storage container may, for example, comprise a tank, such as, for example, in the form of a boiler known per se. There may also be provided a plurality of storage containers, each containing a desired cleaning liquid, in which case the term "cleaning liquid" also comprises (for example liquid) "disinfecting agents" in the context of this invention. A storage container also provides the possibility of performing a pre-treatment on the cleaning liquid, such as pre-heating. However, it is also possible, of course, not to provide a storage container, but to make in each case, according to one's needs, for example by means of a hose, a connection to an external storage container, such as, for example, a water supply pipe or the like.

In all such cases it is possible for the filling device to fill the heating chamber with a measured amount of cleaning liquid. For this purpose, the storage container may, for example, be disposed over the heating chamber, so that the gravitational force will act as driving force. Alternatively, a pumping means or the like may be provided in the storage container, or in an external storage container. The filling device may also comprise a controllable valve or be arranged to control the valve of the heating chamber. In order to determine the amount, the filling device may be equipped, for example, with a flow meter, with a filling chamber having a preferably adjustable volume, or with any other auxiliary means known in the state of the start and suitable for the purpose.

In embodiments, the device comprises a direct connection, or a bypass, between a liquid supply and the discharge. This offers the advantage that it is then possible for the device to direct, for example, cool liquid to the discharge, for example for the purpose of cooling a teat cup after the latter has been cleaned with hot cleaning liquid, without this cool liquid cooling the heating chamber. For, cooling the heating chamber is not necessary and only takes energy. The direct connection may be, for example, a separate line which is advantageously closable. The liquid may then be constituted by a separate cooling liquid, or a non-heated cleaning liquid, etc.

Alternatively, there is provided a direct connection which has itself a branch to the heating chamber, for example via an aperture that is advantageously closable by means of a valve or the like. This means that the heating chamber can be filled with new cleaning liquid via that aperture and, if desired, via the valve, during, or more advantageously prior to, cooling a teat cup and the like. Such a valve may, again advantageously, be the same as the controllable valve that is capable of closing the discharge.

If desired, the valve may have a floating action that is advantageously adjustable in height. If the heating chamber is sufficiently filled, the floating valve will close the heating chamber, and it will be possible to use the remaining liquid for cooling purposes. It will be obvious that, in this case, the liquid will comprise substantially cleaning liquid.

In one embodiment, the cleaning liquid comprises water, in particular substantially water. Water constitutes a very useful cleaning and disinfecting liquid because of its very great heat content, its sufficiently high temperature as a vapour and its great availability in its pure form at a low price. However, other cleaning liquids or additives are not excluded.

In particular, the cleaning liquid comprises a disinfecting agent, for example an acid. Addition of a disinfecting agent may still reinforce the disinfecting action. In special cases, the cleaning liquid comprises substantially the disinfecting agent, in particular if the latter is liquid and can be supplied as vapour.

The heating means have advantageously an adjustable heating power. This adjustability may be switched on and off in a simple manner, but the effective heating power is advantageously adjustable into two or more different positions with heating power unequal to zero, and is more advantageously continuously adjustable. This may, for example, provide advantages if the amount of cleaning liquid to be heated varies. For, heating a small amount is better controllable with a small heating power.

In particular, the heating means comprise a control device which is arranged to control the heating means in such a way that the mentioned situation is not reached, in order to keep the valve closed, at least the valve that closes the discharge. This means that the heating means control the heating condition of the contents of the heating chamber in such a way that the condition in which the valve of the discharge would open is not reached, that is to say that the pressure in the heating chamber remains below the opening overpressure OD, or a corresponding temperature in the heating chamber is kept below the temperature T, the equilibrium vapour pressure being equal to OD, etc. This provides the advantage that the teat cup cleaning device is always ready for cleaning a teat cup (almost) immediately, as soon as the latter is connected, at any rate is offered for cleaning. These control means may moreover be integrated in other control means, if any, such as control means for controlling the valve (in the discharge).

In embodiments, the control means are arranged to switch on the heating means during a desired period of time. Preferably, the desired period of time is adjustable, for example in dependence on the amount or sort of cleaning liquid to be heated, or the desired temperature. If desired, the control means may, advantageously, moreover be arranged to open subsequently the controllable valve. As the effective power of the heating means may vary, for example by (mains) voltage fluctuations in the case of electric heating means, there is advantageously provided a power correcting device that is connected to the heating means. The power correcting device comprises, for example, a power stabilizer, such as a voltage corrector, or an energy meter.

Advantageously, the discharge comprises a discharge duct projecting over a distance L beyond the wall, wherein L is at most equal to the internal depth of the teat cup to be cleaned. By means of such a discharge duct it is possible to clean the interior of the teat cup in a particularly efficient manner. In that case, the discharge duct comprises, of course, at least one aperture, for example at its end, but preferably one or more apertures in a side wall thereof. Such an embodiment is, of course, also suitable for cleaning the exterior of the teat cup.

Incidentally, other embodiments of the discharge are possible as well. For example, the invention also provides a device wherein the discharge comprises a closable aperture in a wall of the heating chamber. In this case, the teat cup may be disposed against that wall around the aperture of the discharge. An additional advantage may be that the upper side of the teat cup will also be disinfected at least to some extent by means of contact with the (hot) wall.

In a particular teat cup cleaning device according to the invention, the valve is controllable by a teat cup to be cleaned. For this purpose the device comprises, for example, an opening mechanism, in the form of a spring mechanism, a push button, a sensor or the like. It is also possible to provide a separate control mechanism, such as a manual control mechanism.

The invention also provides a method of cleaning a teat cup according to claim 16, comprising the steps of supplying an amount of cleaning liquid in a heating chamber which is provided with a discharge that is closable by means of a valve and which is arranged for connection to a teat cup, closing the heating chamber by means of the valve, heating the cleaning liquid in the heating chamber to a condition with a temperature T that is higher than a boiling point Tk of the cleaning liquid at ambient pressure, the valve being arranged to open in this condition, leading the heated contents of the heating chamber, exiting via the discharge, into a teat cup, wherein the amount of cleaning liquid is chosen in such a way that, after the cleaning liquid has been heated to the mentioned condition, there is still cleaning liquid in the liquid state present in the heating chamber. The method substantially corresponds to the application of the device according to the invention, and, therefore, the advantages of the method will not be set out again in further detail. However, it is pointed out that for applying the method it is not necessary to provide a filling device. For, it is also possible, for example, to fill an amount of cleaning liquid manually.

Particular embodiments of this aspect of the invention are described in the claims depending on the corresponding claim 16. Again, the advantages substantially correspond to the related particular embodiments of the device according to the invention and these will, for the sake of brevity, not be set out again in further detail.

In particular, the amount of cleaning liquid is chosen in such a way that, when the valve opens, at least 10%, preferably at least 50%, more preferably at least 90%, of the amount of cleaning liquid with which the heating chamber was initially filled is still present in the liquid state in the heating chamber.

Advantageously, an amount of cleaning liquid which is substantially equal to the content of the heating chamber, is supplied in the heating chamber.

Preferably, the cleaning liquid comprises water, and/or the cleaning liquid comprises a disinfecting agent, for example an acid.

In particular, the valve opens at an adjustable threshold value of a parameter. By means of this the opening characteristic can be chosen in an efficient manner, so that the cleaning characteristic can be chosen as well. The parameter can be chosen from many suitable parameters, of which some favourable embodiments will be provided below.

In embodiments of the method, it is advantageous to cool a teat cup, which teat cup has been cleaned by means of hot cleaning liquid, by means of a liquid that is also supplied via the discharge, or, if desired, via a separate discharge. In particular when using a device having a bypass for liquid supply, this may take place in one go, in which case as little heat as possible, in particular of the still hot heating chamber, will be lost.

In embodiments of the method, the heating chamber is cleaned by filling it with a cleaning liquid and, if desired, by keeping the liquid in the heating chamber during a predetermined period of time, in order to enable it to perform a profound cleaning action, and by subsequently discharging the liquid via the discharge. The latter may take place advantageously by heating also this liquid to above its boiling point at ambient pressure. The liquid will then be removed, again in the case of opening the discharge, by means of a vapour jet.

In a special embodiment, the threshold value is an overpressure OD in the heating chamber and, as the threshold value OD, at least 1 bar above ambient pressure, preferably at least 8 bar above ambient pressure, is set.

In another special embodiment, the threshold value is a temperature OT in the heating chamber and, as the threshold value OT, at least 130°C, more preferably at least 160°C, is set.

The invention will be explained hereinafter in further detail with reference to the drawing, in which some non-limiting exemplary embodiments are shown, and in which:
Figure 1 shows a diagrammatic cross-section of a device according to the invention;
Figure 2 shows a diagrammatic cross-section of a part of an alternative embodiment, and
Figure 3 shows a diagrammatic cross-section of another alternative embodiment.

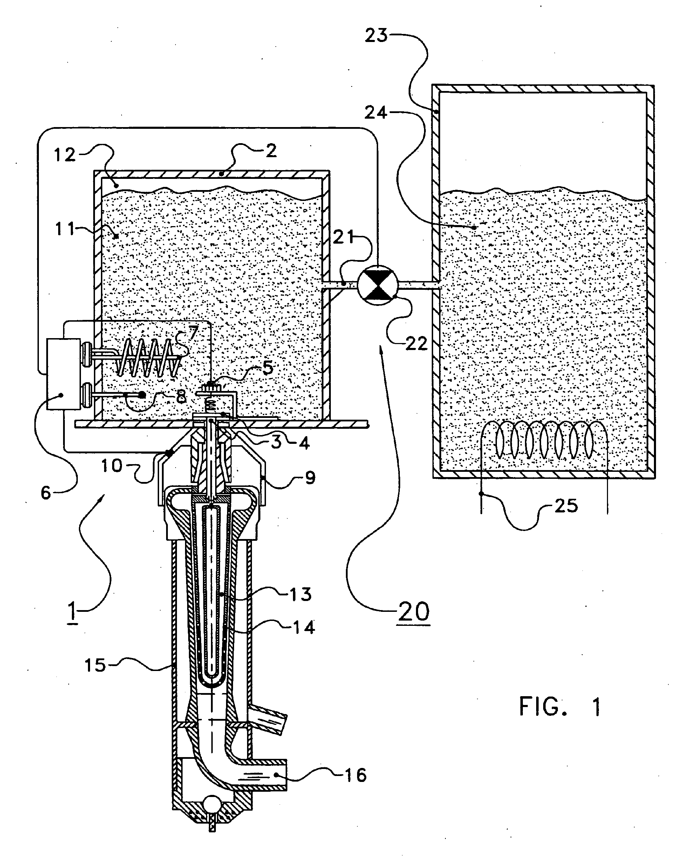

In Figure 1, the device 1 comprises a heating chamber 2 with a discharge 3 that is closable by means of a valve 4. A valve controlling mechanism 5 is connected to the control unit 6 which is connected itself to a heating coil 7, a thermometer 8 and a proximity sensor 10 in a sealing edge 9.

An amount of cleaning liquid is denoted by 11, and an amount of vapour by 12.

A discharge nozzle is denoted by 13 and has apertures 14.

A teat cup is denoted by 15 and has a milk discharge 16.

A filling device is denoted by 20 and comprises a supply line 21 and a valve/pump 22. There is further shown a storage container 23 with a cleaning liquid stock 24 and an immersion heater 25.

The heating chamber 2 may be made of thermally insulating material or be surrounded thereby. Furthermore, the chamber 2 should be able to resist a certain internal pressure and temperature, for which reason it often also comprises a metal housing.

The discharge 3 is closable by means of a valve 4 that is preferably controllable, for example by means of an optional valve control mechanism 5 which may be set, for example, manually or, as shown, by means of a control unit 6. This means that the pressure at which the valve 4 opens is adjustable. The control mechanism may comprise an adjustable spring, be electronically controlled, etc.

The pressure is built up by heating an amount of cleaning liquid 11, often water, by means of a heating coil 7. The heating coil 7 may also be disposed around the heating chamber 2, or in a wall thereof. Other heating means, such as microwave heating etc., may also be applied. The power of the heating coil or the like should be sufficient to bring the contents of the heating chamber 2 at the desired pressure and/or temperature. In practice, values of 160°C to 180°C are often desired, at an amount of approximately 20 cm³. An effective power is then, for example, some hundreds of Watt, although in principle any other power that is greater than the thermal loss at the desired temperature may be suitable as well.

A thermometer 8 may give feedback regarding the temperature to the control unit 6, which, incidentally, are both optional. The control unit 6 may, for example, control the heating by means of the coil 7 on the basis of a measured temperature. 8 might also be a pressure sensor, which, however, should then preferably be disposed in the part of the vapour 12.

For sealing connection of a teat cup 15 there is provided, for example, a sealing edge 9. The latter comprises, for example, a proximity sensor 10 which supplies a signal to the control unit 6 when a teat cup 15 has been connected. At the receipt of such a signal the control unit 6 may order to fill the heating chamber 2, to start the heating, or to open the valve 4. Incidentally, when the teat cup 15 is being positioned, the discharge nozzle 13 will be brought into the teat cup. When the valve 4 opens, the superheated contents will get into the teat cup 15 via the discharge nozzle 13 and through the apertures 14, which ensures an excellent local cleaning or disinfection. A possible overpressure within the teat cup 15 may be discharged in a simple manner via the milk discharge 16, the latter being already provided in the teat cup. Incidentally, the proximity sensor is optional, and the function may also be assumed by the valve 4 itself. For example, the latter may be designed in such a way that it only opens if a teat cup 15 is pressed against it with sufficient force. This is then also a protection against undesired opening of the valve 4.

It is visible in Figure 1 that the heating chamber 2 is filled for more than 90% with cleaning liquid 11, and with vapour 12 above the liquid. In practice, this offers a favourable amount of heat for the total contents of the heating chamber 2. It is already sufficient per se if, at the moment when the desired temperature/overpressure is reached, cleaning liquid in the liquid state is still present. The corresponding amount of liquid which should be supplied initially may be calculated in advance, or, for example, be determined by experiment.

Supplying the desired amount of cleaning liquid 11 takes place, for example, manually, or by means of a filling device 20. The latter comprises at least a supply line 21 for filling the heating chamber, which supply line is connectable to a storage container 23, as well as a valve/pump 22. The latter may perform a pumping action if there is insufficient pressure action from the storage container 23. In case of sufficient pressure, a valve will suffice, which valve is controllable, for example, by means of a control device 6. By means of the control device 6 it is then possible to determine in a simple manner how much cleaning liquid is supplied in the heating chamber. Moreover, it is possible to choose from different cleaning liquids, or, for example, additives, such as disinfecting substances, if, for example, a plurality of storage containers are provided (not shown). In order to facilitate the filling of the heating chamber, there may be provided an air-relief valve (not shown). The cleaning liquid stock 24 may already have been pre-heated by means of the immersion heater 25 or the like, so that an amount concerned in the heating chamber will sooner be at the desired temperature.

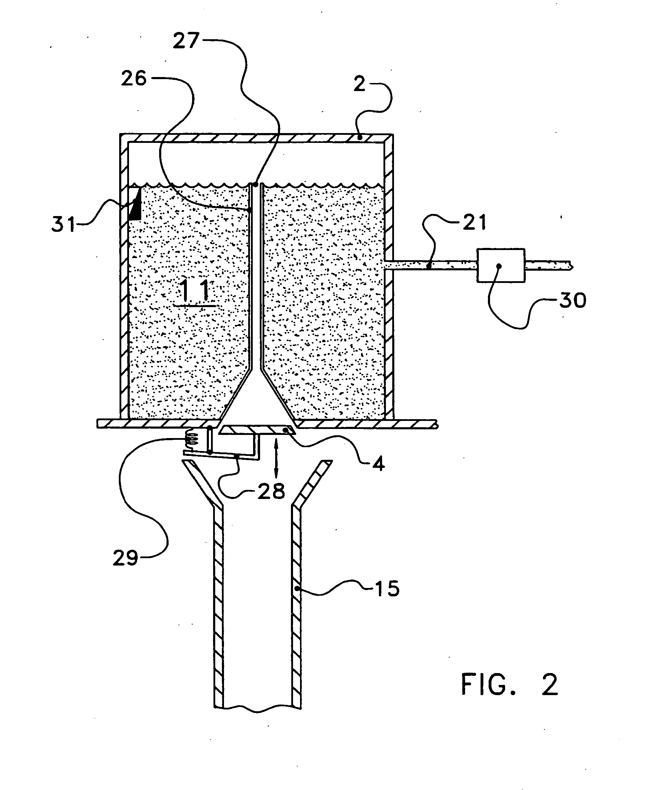

Figure 2 is a diagrammatic cross-sectional view of a part of an alternative embodiment. Similar components are denoted here, like in the rest of the drawing, by the same reference numerals. Some components, such as heating means, have been omitted here for the sake of clarity.

In Figure 2, the heating chamber 2 comprises an overflow tube 26 with a duct 27. The heating chamber 2 further comprises a valve 4 which may be controlled via a valve control 28 and a reset spring 29. A flow meter is denoted by 30 and a level meter by 31.

The overflow tube 26 serves, on the one hand, to discharge the steam-cleaning liquid mixture, via the duct 27, and, on the other hand, subsequently to refill the heating chamber 2. For, if the chamber 2 is empty, cleaning liquid will be supplied again via the supply line 21, for example under the influence of gravitational force in a storage vessel or the like positioned at a higher level. This filling may continue until the level of the liquid 11 reaches the top of the overflow tube 26. In case of further supply, the cleaning liquid 11 will escape via the duct 27. This liquid may, for example, be used for post-rinsing and/or for cooling the cleaned teat cup 15.

The level is adjustable by choosing the (relative) height of the overflow tube 26. By designing, moreover, the tube 26 as a narrow one, the not fillable part can be very small.

Stopping the supply may take place under the action of a flow meter 30 in the supply line 21. There may also be used a level meter 31 which may be designed, for example, as a conductivity meter, a temperature meter, etc.

In a preferred embodiment, the level meter 31 may be disposed at the outer side of the heating chamber 2, for example as a temperature meter, so that it is less or not hindered by calcium deposit, steam erosion and the like. Moreover, it is pointed out here that in fact the entire heating chamber may be free of electr(on)ically controlled valves and the like, as will be set out hereinafter in further detail.

The valve 4 is not only a safety valve that opens when the pressure in the chamber 2 becomes too high for any reason whatsoever. Moreover, this valve may be controlled with the aid of a valve control 28 in such a way that it will open in a desired manner and at a desired point of time. Advantageously, the valve control 28 is controllable by pressing against it by means of a teat cup 15. It will then be possible for the valve 4 to move in the direction of the arrow and to open. The reset spring 29 keeps the valve 4 closed in the inoperative position. Other embodiments of such a valve 4 are conceivable, such as provided with springs, sliding means, levers and the like.

Please note that the time required for cleaning and/or disinfecting the teat cup by means of the hot contents ejected from the heating chamber may be used for refilling the chamber 2. It is also possible, of course, to withdraw the cup 15 from the device during some time. The chamber 2 then fills and will not overflow, because the valve 4 is then closed.

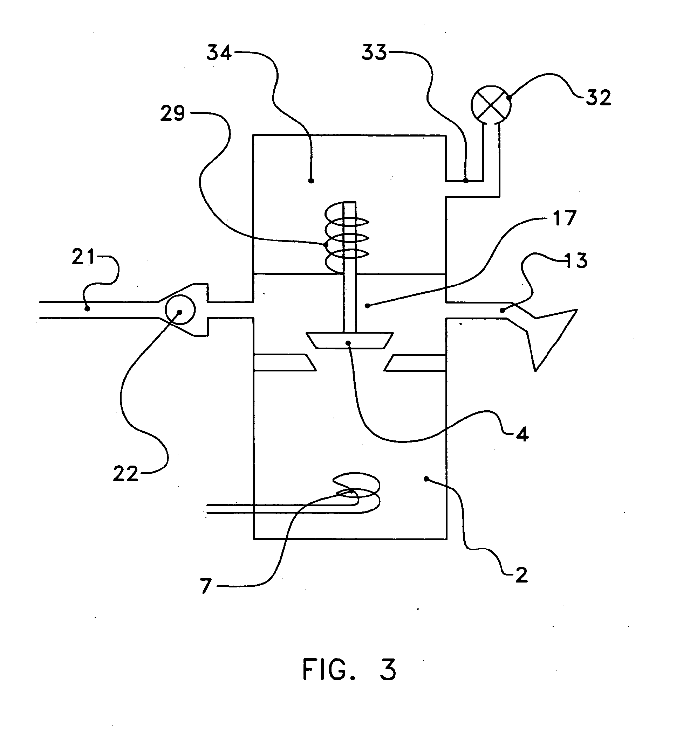

Figure 3 shows a diagrammatic cross-section of another alternative embodiment. Here, 21 is a supply line for liquid, such as cleaning liquid, which is closable by means of a non-return valve 22'. The supply line 21 is connected to the discharge 13 via a bypass 17.

Here, the valve 4 has been brought under pretension by means of a reset spring 29, and may further be operated by means of a pneumatic (or alternatively) hydraulic mechanism which comprises: a pump 32, a gas passage 33 and a pressure chamber 34. By means of this mechanism it is possible to operate the valve 4 in a quick and simple manner.

The valve 4 may also be provided in the heating chamber 2, and have in that case a floating action. By rinsing or cooling the device by means of liquid, the heating chamber 2 will be filled, in which case the float valve will rise until it closes the heating chamber.

The function of the bypass 17 is to prevent, in the case of cooling a teat cup by means of cool liquid flowing through, the liquid from flowing also through the heating chamber 2 and cooling the latter unnecessarily. For this purpose, the heating chamber 2 with the valve 4 may be closed. Since, however, the heating chamber should be filled again with (cleaning) liquid, it is, as an alternative, also possible to fill the heating chamber 2 with the rinsing liquid during rinsing/cooling. As soon as the heating chamber 2 has been filled, either the liquid flows by itself "across the chamber 2", or the chamber 2 may be closed actively, such as by means of the valve 4.

The invention is not limited to the shown embodiments. The person skilled in the art will be able to apply various modifications and adaptations within the scope of the invention, the scope of protection for the invention being determined by the accompanying claims.

## Claims

1. Teat cup cleaning device comprising:
- a heating chamber (2), provided with a discharge (3) that is closable by means of a valve (4), and arranged for connection to at least one teat cup,
- a filling device (20) for filling the heating chamber (2) with an amount of cleaning liquid, and
- heating means that are designed to heat the contents of the heating chamber (2),
**characterised in that** the filling device (20) is arranged to fill the heating chamber (2) with such an amount of cleaning liquid (11) that, in a situation in which the heating chamber (2) has been closed by means of the valve (4) and the cleaning liquid (11) has been heated to a temperature T higher than the boiling point Tk of the cleaning liquid at ambient pressure, the valve (4) being arranged to open in this situation, there will be cleaning liquid (11) in the liquid state present in the heating chamber (2).

2. Teat cup cleaning device according to claim 1, wherein the filling device (20) is arranged to fill the heating chamber (2) with such an amount of cleaning liquid (11) that in the mentioned situation at least 10%, preferably at least 50%, more preferably at least 90%, of the amount of cleaning liquid (11) with which the heating chamber (2) was initially filled, will be present in the liquid state in the heating chamber (2).

3. Teat cup cleaning device according to any one of the preceding claims, wherein the filling device (20) is arranged to fill the heating chamber (2) with an amount of cleaning liquid (11) that is substantially equal to the content of the heating chamber (2).

4. Teat cup cleaning device according to any one of the preceding claims, wherein the temperature T amounts to at least 130°C, more preferably to at least 160°C.

5. Teat cup cleaning device according to any one of the preceding claims, wherein the valve (4) comprises a pressure-relief valve.

6. Teat cup cleaning device according to claim 5, wherein an opening overpressure OD of the pressure-relief valve amounts to at least 2 bar absolute pressure, preferably to at least 8 bar absolute pressure.

7. Teat cup cleaning device according to any one of the preceding claims, wherein the valve (4) comprises a valve that is controllable by means of a control device.

8. Teat cup cleaning device according to claim 7, wherein the control device is arranged to open the valve (4) at one of a temperature OT or a pressure OD, preferably an adjustable temperature OT or an adjustable pressure OD, in the heating chamber.

9. Teat cup cleaning device according to any one of the preceding claims, comprising a cleaning liquid storage container (23) which is connectable to the heating chamber (2), preferably by means of a second valve (22).

10. Teat cup cleaning device according to any one of the preceding claims, wherein the cleaning liquid (11) comprises water.

11. Teat cup cleaning device according to any one of the preceding claims, wherein the cleaning liquid (14) comprises a disinfecting agent, for example an acid.

12. Teat cup cleaning device according to any one of the preceding claims, wherein the heating means have an adjustable heating power.

13. Teat cup cleaning device according to any one of the preceding claims, wherein the heating means comprise a control device which is arranged to control the heating means in such a way that the mentioned situation is not reached, in order to keep the valve closed.

14. Teat cup cleaning device according to any one of the preceding claims, wherein the discharge (3) comprises a discharge duct projecting over a distance L beyond the wall, wherein L is at most equal to the internal depth of the teat cup to be cleaned.

15. Teat cup cleaning device according to any one of the preceding claims, wherein the valve (4) is controllable by a teat cup (15) to be cleaned, in particular the discharge or the entire heating chamber being arranged for connection to and cleaning of a plurality of teat cups.

16. Method of cleaning a teat cup, comprising the steps of
- supplying an amount of cleaning liquid in a heating chamber (2) which is provided with a discharge that is closable by means of a valve (4) and which is arranged for connection to a teat cup (15);
- closing the heating chamber (2) by means of the valve (4);
- heating the cleaning liquid (11) in the heating chamber (2) to a condition with a temperature T that is higher than a boiling point Tk of the cleaning liquid (11) at ambient pressure, the valve (4) being arranged to open in this condition;
- leading the heated contents of the heating chamber (2), exiting via the discharge, into a teat cup,
wherein the amount of cleaning liquid (11) is chosen in such a way that, after the cleaning liquid (11) has been heated to the mentioned condition, there is still cleaning liquid (11) in the liquid state present in the heating chamber (2).

17. Method according to claim 16, wherein the amount of cleaning liquid (11) is chosen in such a way that, when the valve (4) opens, at least 10%, preferably at least 50%, more preferably at least 90%, of the amount of cleaning liquid (11) with which the heating chamber was initially filled is still present in the liquid state in the heating chamber (2).

18. Method according to claim 16 or 17, wherein an amount of cleaning liquid (11), which is substantially equal to the content of the heating chamber (2), is supplied in the heating chamber (2).

19. Method according to any one of claims 16 - 18, wherein the cleaning liquid (11) comprises water.

20. Method according to any one of claims 16 - 19, wherein the cleaning liquid (11) comprises a disinfecting agent, for example an acid.

21. Method according to any one of claims 16 - 20, wherein the valve (4) opens at an adjustable threshold value of a parameter.

22. Method according to claim 21, wherein the threshold value is an overpressure OD in the heating chamber (2) and, as the threshold value OD, at least 2 bar absolute pressure, preferably at least 8 bar absolute pressure, is set.

23. Method according to claim 21 or 22, wherein the threshold value is a temperature OT in the heating chamber (2) and, as the threshold value OT, at least 130°C, more preferably at least 160°C, is set.

## Patentansprüche

1. Zitzenbecher-Reinigungsvorrichtung, umfassend:
- eine Heizkammer (2), die mit einem Auslass (3) versehen ist, der durch ein Ventil (4) verschließbar ist, und geeignet ist, um mit mindestens einem Zitzenbecher verbunden zu werden,
- eine Füllvorrichtung (20) zum Füllen der Heizkammer (2) mit einer Menge einer Reinigungsflüssigkeit; und
- einer Heizvorrichtung, die konzipiert ist, um den Inhalt der Heizkammer (2) zu erwärmen,
**dadurch gekennzeichnet, dass** die Füllvorrichtung (20) dazu dient, die Heizkammer (2) mit einer derartigen Menge der Reinigungsflüssigkeit (11) zu füllen, dass, in einer Situation, in der die Heizkammer (2) durch das Ventil (4) verschlossen wurde und die Reinigungsflüssigkeit (11) auf eine Temperatur T über dem Siedepunkt Tk der Reinigungsflüssigkeit bei Umgebungsdruck erwärmt wurde, wobei das Ventil (4) dazu dient, in dieser Situation zu öffnen, damit Reinigungsflüssigkeit (11) in flüssigem Zustand in der Heizkammer (2) vorhanden ist.

2. Zitzenbecher-Reinigungsvorrichtung nach Anspruch 1, wobei die Füllvorrichtung (20) geeignet ist, um die Heizkammer (2) mit einer derartigen Menge Reinigungsflüssigkeit (11) zu füllen, dass in der erwähnten Situation mindestens 10 %, vorzugsweise mindestens 50 %, mehr bevorzugt mindestens 90 % der Menge Reinigungsflüssigkeit (11), mit der die Heizkammer (2) anfangs gefüllt wurde, in flüssigem Zustand in der Heizkammer (2) vorhanden sind.

3. Zitzenbecher-Reinigungsvorrichtung nach einem der vorherigen Ansprüche, wobei die Füllvorrichtung (20) angeordnet ist, um die Heizkammer (2) mit einer Menge Reinigungsflüssigkeit (11) zu füllen, die im Wesentlichen dem Fassungsvermögen der Heizkammer (2) entspricht.

4. Zitzenbecher-Reinigungsvorrichtung nach einem der vorherigen Ansprüche, wobei die Temperatur T mindestens 130°C, mehr bevorzugt mindestens 160°C beträgt.

5. Zitzenbecher-Reinigungsvorrichtung nach einem der vorherigen Ansprüche, wobei das Ventil (4) ein Druckentlastungsventil umfasst.

6. Zitzenbecher-Reinigungsvorrichtung nach Anspruch 5, wobei ein Öffnungsüberdruck OD des Druckentlastungsventils mindestens 2 bar Absolutdruck, vorzugsweise mindestens 8 bar Absolutdruck beträgt.

7. Zitzenbecher-Reinigungsvorrichtung nach einem der vorherigen Ansprüche, wobei das Ventil (4) ein durch eine Steuervorrichtung steuerbares Ventil umfasst.

8. Zitzenbecher-Reinigungsvorrichtung nach Anspruch 7, wobei die Steuervorrichtung geeignet ist, um das Ventil (4) bei einer Temperatur OT oder einem Druck OD, vorzugsweise einer einstellbaren Temperatur OT oder einem einstellbaren Druck OD in der Heizkammer zu öffnen.

9. Zitzenbecher-Reinigungsvorrichtung nach einem der vorherigen Ansprüche, umfassend einen Reinigungsflüssigkeits-Vorratsbehälter (23), der mit der Heizkammer (2) vorzugsweise durch ein zweites Ventil (22) verbindbar ist.

10. Zitzenbecher-Reinigungsvorrichtung nach einem der vorherigen Ansprüche, wobei die Reinigungsflüssigkeit (11) Wasser enthält.

11. Zitzenbecher-Reinigungsvorrichtung nach einem der vorherigen Ansprüche, wobei die Reinigungsflüssigkeit (14) ein Desinfektionsmittel, zum Beispiel eine Säure enthält.

12. Zitzenbecher-Reinigungsvorrichtung nach einem der vorherigen Ansprüche, wobei die Heizvorrichtung eine einstellbare Heizleistung hat.

13. Zitzenbecher-Reinigungsvorrichtung nach einem der vorherigen Ansprüche, wobei die Heizvorrichtung eine Steuervorrichtung umfasst, die geeignet ist, um die Heizvorrichtung derart zu steuern, dass die erwähnte Situation nicht erreicht wird, um das Ventil geschlossen zu halten.

14. Zitzenbecher-Reinigungsvorrichtung nach einem der vorherigen Ansprüche, wobei der Auslass (3) eine Auslassleitung umfasst, die über einen Abstand L über die Wand hinaus hervorsteht, wobei L mindestens der inneren Tiefe des zu reinigenden Zitzenbechers entspricht.

15. Zitzenbecher-Reinigungsvorrichtung nach einem der vorherigen Ansprüche, wobei das Ventil (4) durch einen zu reinigenden Zitzenbecher (15) steuerbar ist, wobei insbesondere der Auslass oder die gesamte Heizkammer geeignet sind, um mit mehreren Zitzenbechern verbunden zu werden und diese zu reinigen.

16. Verfahren zum Reinigen eines Zitzenbechers, umfassend die folgenden Schritte:
- Befördern einer Menge einer Reinigungsflüssigkeit in eine Heizkammer (2), die mit einem Auslass versehen ist, der durch ein Ventil (4) verschließbar ist und die dazu dient, mit einem Zitzenbecher (15) verbunden zu werden;
- Verschließen der Heizkammer (2) durch das Ventil (4);
- Erwärmen der Reinigungsflüssigkeit (11) in der Heizkammer (2) auf einen Zustand mit einer Temperatur T über dem Siedepunkt Tk der Reinigungsflüssigkeit (11) bei Umgebungsdruck, wobei das Ventil (4) geeignet ist, in diesem Zustand zu öffnen;
- Leiten des erwärmten Inhalts der Heizkammer (2), der durch den Auslass austritt, in einen Zitzenbecher,
wobei die Menge der Reinigungsflüssigkeit (11) derart ausgewählt wird, dass nach dem Erwärmen der Reinigungsflüssigkeit (11) auf den erwähnten Zustand noch immer Reinigungsflüssigkeit (11) in flüssigem Zustand in der Heizkammer (2) vorhanden ist.

17. Verfahren nach Anspruch 16, wobei die Menge Reinigungsflüssigkeit (11) derart ausgewählt wird, dass, wenn das Ventil (4) öffnet, noch immer mindestens 10 %, vorzugsweise mindestens 50 %, mehr bevorzugt mindestens 90 % der Menge der Reinigungsflüssigkeit (11) in flüssigem Zustand in der Heizkammer (2) vorhanden sind.

18. Verfahren nach Anspruch 16 oder 17, wobei eine Menge der Reinigungsflüssigkeit (11), die im Wesentlichen dem Fassungsvermögen der Heizkammer (2) entspricht, in die Heizkammer (2) befördert wird.

19. Verfahren nach einem der Ansprüche 16 bis 18, wobei die Reinigungsflüssigkeit (11) Wasser enthält.

20. Verfahren nach einem der Ansprüche 16 bis 19, wobei die Reinigungsflüssigkeit (11) ein Desinfektionsmittel, zum Beispiel eine Säure enthält.

21. Verfahren nach einem der Ansprüche 16 bis 20, wobei das Ventil (4) bei einem einstellbaren Schwellenwert eines Parameters öffnet.

22. Verfahren nach Anspruch 21, wobei der Schwellenwert ein Überdruck OD in der Heizkammer (2) ist und als Schwellenwert OD mindestens 2 bar Absolutdruck, vorzugsweise mindestens 8 bar Absolutdruck eingestellt wird.

23. Verfahren nach Anspruch 21 oder 22, wobei der Schwellenwert eine Temperatur OT in der Heizkammer (2) ist und als Schwellenwert OT mindestens 130°C, mehr bevorzugt mindestens 160°C eingestellt wird.

## Revendications

1. Dispositif de nettoyage de gobelet trayeur comprenant :
- une chambre de chauffage (2), pourvue d'une évacuation (3) qui peut être fermée au moyen d'un clapet (4), et agencée pour être raccordée à au moins un gobelet trayeur,
- un dispositif de remplissage (20) destiné à remplir la chambre de chauffage (2) avec une quantité de liquide de nettoyage, et
- des moyens de chauffage qui sont conçus pour chauffer le contenu de la chambre de chauffage (2),
**caractérisé en ce que** le dispositif de remplissage (20) est agencé pour remplir la chambre de chauffage (2) avec une quantité de liquide de nettoyage (11) telle que, dans une situation dans laquelle la chambre de chauffage (2) a été fermée au moyen du clapet (4) et le liquide de nettoyage (11) a été chauffé jusqu'à une température T supérieure au point d'ébullition Tk du liquide de nettoyage à pression ambiante, le clapet (4) étant agencé pour s'ouvrir dans cette situation, il y aura un liquide de nettoyage (11) dans un état liquide présent dans la chambre de chauffage (2).

2. Dispositif de nettoyage de gobelet trayeur selon la revendication 1, dans lequel le dispositif de remplissage (20) est agencé pour remplir la chambre de chauffage (2) avec une quantité de liquide de nettoyage (11) telle que, dans la situation mentionnée, au moins 10 %, de préférence au moins 50 %, idéalement au moins 90 %, de la quantité de liquide de nettoyage (11) avec laquelle la chambre de chauffage (2) a initialement été remplie, sera présent dans un état liquide dans la chambre de chauffage (2).

3. Dispositif de nettoyage de gobelet trayeur selon l'une quelconque des revendications précédentes, dans lequel le dispositif de remplissage (20) est agencé pour remplir la chambre de chauffage (2) avec une quantité de liquide de nettoyage (11) qui est sensiblement égale à la contenance de la chambre de chauffage (2).

4. Dispositif de nettoyage de gobelet trayeur selon l'une quelconque des revendications précédentes, dans lequel la température T s'élève à au moins 130 °C, idéalement à au moins 160 °C.

5. Dispositif de nettoyage de gobelet trayeur selon l'une quelconque des revendications précédentes, dans lequel le clapet (4) comprend un clapet de décharge de pression.

6. Dispositif de nettoyage de gobelet trayeur selon la revendication 5, dans lequel une surpression d'ouverture OD du clapet de décharge de pression s'élève à au moins une pression absolue de 2 bars, de préférence à au moins une pression absolue de 8 bars.

7. Dispositif de nettoyage de gobelet trayeur selon l'une quelconque des revendications précédentes, dans lequel le clapet (4) comprend un clapet qui peut être commandé au moyen d'un dispositif de commande.

8. Dispositif de nettoyage de gobelet trayeur selon la revendication 7, dans lequel le dispositif de commande est agencée pour ouvrir le clapet (4) à une température OT ou à une pression OD, de préférence à une température réglable OT ou à une pression réglable OD, dans la chambre de chauffage.

9. Dispositif de nettoyage de gobelet trayeur selon l'une quelconque des revendications précédentes, comprenant un récipient de stockage de liquide de nettoyage (23) qui peut être raccordé à la chambre de chauffage (2), de préférence au moyen d'un second clapet (22).

10. Dispositif de nettoyage de gobelet trayeur selon l'une quelconque des revendications précédentes, dans lequel le liquide de nettoyage (11) comprend de l'eau.

11. Dispositif de nettoyage de gobelet trayeur selon l'une quelconque des revendications précédentes, dans lequel le liquide de nettoyage (14) comprend un agent désinfectant, par exemple un acide.

12. Dispositif de nettoyage de gobelet trayeur selon l'une quelconque des revendications précédentes, dans lequel les moyens de chauffage possèdent une puissance de chauffage réglable.

13. Dispositif de nettoyage de gobelet trayeur selon l'une quelconque des revendications précédentes, dans lequel les moyens de chauffage comprennent un dispositif de commande qui est agencé pour commander les moyens de chauffage de manière telle que la situation mentionnée n'est pas atteinte, afin de maintenir le clapet fermé.

14. Dispositif de nettoyage de gobelet trayeur selon l'une quelconque des revendications précédentes, dans lequel l'évacuation (3) comprend une conduite d'évacuation faisant saillie selon une distance L au-delà de la paroi, dans lequel L est au plus égale à la profondeur interne du gobelet trayeur destiné à être nettoyé.

15. Dispositif de nettoyage de gobelet trayeur selon l'une quelconque des revendications précédentes, dans lequel le clapet (4) peut être commandé par un gobelet trayeur (15) destiné à être nettoyé, en particulier l'évacuation ou la chambre de chauffage entière étant agencée pour être raccordée à et pour nettoyer une pluralité de gobelets trayeurs.

16. Procédé de nettoyage d'un gobelet trayeur, comprenant les étapes consistant à :
- distribuer une quantité de liquide de nettoyage dans une chambre de chauffage (2) qui est pourvue d'une évacuation qui peut être fermée au moyen d'un clapet (4) et qui est agencée pour être raccordée à un gobelet trayeur (15) ;
- fermer la chambre de chauffage (2) au moyen du clapet (4) ;
- chauffer le liquide de nettoyage (11) dans la chambre de chauffage (2) jusqu'à une condition avec une température T qui est supérieure à un point d'ébullition Tk du liquide de nettoyage (11) à pression ambiante, le clapet (4) étant agencé pour s'ouvrir dans cette condition ;
- amener le contenu chauffé de la chambre de chauffage (2), sortant par l'intermédiaire de l'évacuation, dans un gobelet trayeur,
dans lequel la quantité de liquide de nettoyage (11) est choisie de manière telle que, après que le liquide de nettoyage (11) a été chauffé jusqu'à la condition mentionnée, il y ait toujours un liquide de nettoyage (11) dans un état liquide présent dans la chambre de chauffage (2).

17. Procédé selon la revendication 16, dans lequel la quantité de liquide de nettoyage (11) est choisie de manière telle que, lorsque le clapet (4) s'ouvre, au moins 10 %, de préférence au moins 50 %, idéalement au moins 90 %, de la quantité de liquide de nettoyage (11) avec laquelle la chambre de chauffage a initialement été remplie est toujours présent dans un état liquide dans la chambre de chauffage (2).

18. Procédé selon la revendication 16 ou 17, dans lequel une quantité de liquide de nettoyage (11), qui est sensiblement égale à la contenance de la chambre de chauffage (2), est distribuée dans la chambre de chauffage (2).

19. Procédé selon l'une quelconque des revendications 16 à 18, dans lequel le liquide de nettoyage (11) comprend de l'eau.

20. Procédé selon l'une quelconque des revendications 16 à 19, dans lequel le liquide de nettoyage (11) comprend un agent désinfectant, par exemple un acide.

21. Procédé selon l'une quelconque des revendications 16 à 20, dans lequel le clapet (4) s'ouvre à une valeur de seuil réglable d'un paramètre.

22. Procédé selon la revendication 21, dans lequel la valeur de seuil est une surpression OD dans la chambre de chauffage (2) et, en tant que valeur de seuil OD, au moins une pression absolue de 2 bars, de préférence au moins une pression absolue de 8 bars, est réglée.

23. Procédé selon la revendication 21 ou 22, dans lequel la valeur de seuil est une température OT dans la chambre de chauffage (2) et, en tant que valeur de seuil OT, au moins 130 °C, idéalement au moins 160 °C, est réglée.
